# EUROPEAN PATENT SPECIFICATION

(11) **EP 2 189 518 B1**
(45) Date of publication and mention of the grant of the patent: **16.04.2014**
(21) Application number: 08790640.0
(22) Date of filing: 26.06.2008
(51) Int. Cl.: C12C 3/00, C12C 7/00, A23L 2/52

(54) **PROCESS FOR PRODUCING BEER OR BEER-LIKE BEVERAGE**
VERFAHREN ZUR HERSTELLUNG VON BIER ODER EINES BIERÄHNLICHEN GETRÄNKS
PROCÉDÉ DE PRODUCTION DE BIÈRE OU DE BOISSON SIMILAIRE À LA BIÈRE

(30) Priority: 04.09.2007 JP 2007228681; 10.06.2008 JP 2008151935
(43) Date of publication of application: 26.05.2010
(73) Proprietor: Asahi Breweries, Ltd., Sumida-ku Tokyo 130-8602 (JP)
(72) Inventor: IMASHUKU, Hisato, Suita-shi Osaka 564-0071 (JP)
(74) Representative: Schnappauf, Georg
(86) International application number: PCT/JP2008/061625
(87) International publication number: WO 2009/031354

(56) References cited:
- WO-A1-01/30961
- GB-A- 1 071 867
- JP-B- 40 004 427
- JP-B- 45 001 237
- US-A- 2 893 870
- GANZLIN G: "Hop extract and its uses", B.I.F. BULLETIN DE L'ASSOCIATION DES ANCIENS ELEVES DE L'INSTITUT DES INDUSTRIES DE FERMENTATION DE BRUXELLES (C.E.R.I.A.) ; A.S.B.L,, vol. 14, no. 98, 1 January 1971 (1971-01-01), pages 172-174, XP009141219,
- HIDEO MIYACHI: 'Beer jozo gijutsu(first edition)' SHOKUHIN SANGYO SHIMBUNSHA CO.LTD. 1999, page 56 TO 59,263 TO 264,381 TO 385, XP008143196

## Description

### Technical Field

The present invention relates to a process for producing beer or beer-like beverage.

Through the present invention, "beer or beer-like beverage" is used in the sense that, not to mention beers and low-malt beers currently provided in the Japanese Liquor Tax Act, it also covers so-called "the third beers" in Japan (i.e. quasi-beers) and beer-taste beverages. In order to simplify the explanation in the present description, "beer or beer-like beverage" is sometimes referred to just as "beer", however, this is a representative term for "beer or beer-like beverage", and it should be understood that the explanation is also applicable to low-malt beers and other beer-like beverages.

### Background Art

In the production process of beer, it is well known a step wherein hop is added to wort and boiled together for preparation before fermentation and lagering (for example, refer to Patent Citations 1-3). Such boiling of wort and hop is carried out in order to, for example, give a bitter taste to wort by solubilizing a bittering component of hop, and remove an aroma component derived from malt (hereinafter simply referred to as a "malt aroma component") by evaporation.
Patent Citation 1: JP 10-323174 A
Patent Citation 2: JP 2002-519018 A
Patent Citation 3: JP 2003-251175 A
Patent Citation 4: JP 40-4427 B1

US 2,893,870 A describes the brewing of beer with the following steps: suspending the hops in an aqueous medium, subjecting the hops suspension to a gyratory disintegration to dissolve the hops resins and to disperse the insoluble components into a very fine dispersion, adding said dispersion containing the dissolved hops resins to the wort, subjecting the hopped wort to fermentation and removing the insoluble components only after fermentation.

GB 1,071,867 A relates to a process for preparing stable emulsions of hop extracts which are dispersible in cold water, cold wort and cold beer and which are useful in flavoring beer and ale.

### Disclosure of Invention

### Technical Problem

In the conventional boiling step, wort is supplied into a boiling kettle, and also hop is added thereinto, so that the wort and the hop are boiled together (refer to Patent Citation 3). In general, boiling is carried out as follows: using commercially available hop in the form of pellet or the like as it is without any treatment, heating a mixture of the wort and the hop to raise its temperature, and continuously heating the mixture to boil even after it reaches a boiling state so as to obtain a predetermined evaporation rate (hereinafter, such a boiling method is also referred to as a "conventional general boiling method").

Finished beers are evaluated by many qualities such as bitterness, aroma, foam retention, oxidation resistance and so on. Since heating conditions in the boiling step greatly affect these qualities, optimal conditions have to be found depending on the desired qualities of the finished beers.

Since α-acid(s), which is a bittering component of hop, is solubilized by isomerization under a high temperature, it is required to sufficiently isomerize α-acid by heating in order to efficiently use the bittering component of the hop. On the other hand, when wort is heated, S-methyl methionine, which is derived from malt, is converted to dimethyl sulfide, which has an unpleasant aroma (off-flavor). Therefore, such a malt aroma component is preferably removed by boiling to evaporate. Further, a substance contributing to foam retention (for example, a 40 kDa protein) and a substance contributing to oxidation resistance (for example, a reducing substance or a group of substances collectively referred to as reductones) are also derived from malt, and since these substances decrease in amount with time by heating the wort, the shorter the heating time of the wort, the better for improving foam retention and oxidation resistance.

For example, if the boiling time is merely shortened in order to improve the foam retention and the oxidation resistance, extraction (solubilization) of the bittering component of the hop becomes insufficient, the bitterness of finished beers is weakened (or a large amount of hop is required in order to supplement weakened bitterness). In addition, evaporation of the malt aroma component becomes insufficient, so that the unpleasant malt aroma component remains in finned beers.

As understood from the above, since many qualities are affected by changing only one factor of the heating conditions in the boiling step, it is very difficult to set heating conditions so as to obtain finished beers with the desired qualities. Looking at this from the opposite point of view, the conventional general boiling method has an extremely small flexibility (or window) for the heating conditions, and product qualities obtained are limited.

Hereinbefore, boiling of wort and hop has been described, similar problems can happen not only in the case where wort as a raw material liquid is boiled together with hop but also in the case like a so-called the third beer where a raw material liquid obtained from other than malt is boiled together with hop.

Regarding this problem, in order to make effective use of the bittering component of hop at a higher ratio, a document discloses a method in which hop cones are directly boiled in a solvent, and a method in which the bittering component is extracted from hop and this extract is boiled in a solvent (refer to Patent Citation 4). This document states that the former method requires using a solvent in an amount of at least 120 times the weight of the hop cones, and that the latter method causes the extracted bittering component separated likes oils from an aqueous solvent, and thus proposes use of a super viscous colloidal dispersion phase.

Previously, with respect to hop (or hops), the effective use of the bittering component of hop has been emphasized (refer to Patent Citation 4).

The present inventor focused on the aroma component derived from hop (hereinafter simply referred to as the "hop aroma component") in addition to extraction (solubilization, specifically isomerization of α-acid) of the bittering component of hop, and based on a commercial product concept, the realization of which has been thought to be impossible with the conventional general technique, got an absolutely novel and unique idea that the amount of the hop aroma component is preferably reduced and moreover removed by controlling the amount of the hop aroma component which is contained in wort in the end. The present invention provides a novel process for producing beer or beer-like beverage which enables more flexible heating conditions, and reduces or removes the hop aroma component.

### Technical Solution

The present inventor intensively studied based on the absolutely novel idea of reducing or removing the hop aroma component contained in the wort in the end, while enabling the more flexible heating conditions. As a result, the present invention has been completed.

According to a first aspect of the present invention, there is provided a process for producing beer or beer-like beverage, comprising:
(a) boiling hop together with a solvent, wherein an amount of the solvent is
   (i) an amount of 25 to 100 liters per kg of pelletized raw hop, and
   (ii) an additional amount corresponding to evaporation loss per kg of pelletized raw hop, wherein the additional amount corresponds to 1 to 15 kg per kg of pelletized raw hop, and thus,
      obtaining a hop-treated liquid matter,
      wherein the boiling is carried out so that a high-temperature holding time from 30 to 180 minutes is obtained in the step (a)
(b) adding thus obtained hop-treated liquid matter by the step (a) to a raw material liquid which is wort, and boiling a mixture of the raw material liquid and the hop-treated liquid matter, wherein the boiling in the step b) comprises:
   (i) heating the raw material liquid to raise its temperature;
   (ii) while holding the temperature-raised raw material liquid at a high temperature in a non-boiling state, adding the hop-treated liquid matter thereto to form a mixture of the raw material liquid and the hop-treated liquid matter, and subsequently holding the mixture at a high temperature in a non-boiling state, wherein the high temperature is in a range between a boiling point to a temperature which is 10°C lower than the boiling point; and
   (iii) after the high-temperature holding, heating the mixture to boil.

In the conventional general boiling method, since hop and wort are only boiled together in a boiling kettle without any treatment of the hop, the heating conditions must be set while being subjected to restrictions from both the hop and the wort. Further, boiling of the hop and the wort together causes removal of the malt aroma component by evaporation, and also removal of the hop aroma component by evaporation unexpectedly. However, in the conventional boiling method, since the wort is present in a large amount compared with the hop (typically, the wort in an initial amount of about 1000 L per kg of pelletized raw hop), such evaporation of the hop aroma component is a physical phenomenon that occurs in a system which contains hop sparsely. In addition, in the conventional general boiling method, when an evaporation level is controlled in order to obtain a predetermined extract concentration, an evaporation rate is used as its parameter.

In contrast, according to the present invention, in the step (a) hop is boiled in advance (also referred to as "hop treatment"), and in the step (b) a raw material liquid (wort) is boiled (in the case of the first aspect of the present invention, boiled together with the hop-treated liquid matter, and in the case of the second aspect of the present invention described below, boiled separately therefrom), it is possible to set heating conditions for the hop different from those for the raw material liquid. In more detail, in the case of the first aspect of the present invention, the heating conditions can be broken down into those for the hop and those for the raw material, and the heating conditions desired for the hop are set at the whole of the steps (a) and (b), and the heating conditions desired for the raw material liquid are set for the step (b). By the hop treatment of the step (a), the bittering component of the hop can be extracted (specifically, isomerization of α-acid). In this step (a), since the used solvent is in an amount of 25-100 liters and an additional amount corresponding to evaporation loss per kg of pelletized raw hop, evaporation of the hop aroma component is a physical phenomenon that occurs in a system which contains hop at a considerably high ratio. In addition, in such a system, the parameter of the evaporation loss per kg of pelletized raw hop is set to 1-15 kg, whereby it is possible to efficiently reduce or remove the hop aroma component, regardless of the amount of the solvent. As just described, the different heating conditions of the hop from those of the raw material liquid, and the boiling in the system containing the hop at a considerably high ratio so as to obtain an evaporation loss per kg of pelletized raw hop in the predetermined range are characteristic features of the present invention.

It is noted that "hop" (or hops) used in the present invention may have any form such as a pellet, an extract, a cone and so on, and that "per kg of pelletized raw hop" means that the "hop" of any form used as the raw material are converted to the raw material hop in the form of "pellet". Further, in the present invention, the "evaporation loss" is found as [(the initial weight of the liquid matter) - (the final weight of the liquid matter)] (it would be fair to say that the loss is all due to liquid evaporation). The "evaporation loss" "per kg of pelletized raw hop" means [(the initial weight of the liquid matter) - (the final weight of the liquid matter)] per kg of the untreated raw material hop which is converted to hop in the form of "pellet" as above.

"Boiling" means that a liquid matter to be treated is heated and becomes a boiling state during at least a part of the heating period.

The "liquid matter" is used in the sense of not only liquid but also including solid such as hop (or hop dreg) if present.

The "hop aroma component" is not particularly limited as long as it is an aroma component derived from hop, and is typically linalool.

The "malt aroma component" is not particularly limited as long as it is an aroma component derived from malt, and is typically dimethyl sulfide which is produced from S-methyl methionine and emits an unpleasant aroma.

When the evaporation loss in the step (a) is 1 kg or more per kg of pelletized raw hop, the hop aroma component can be reduced. When it is 15 kg or less per kg of pelletized raw hop, it is possible to prevent unnecessary heat energy from being consumed.

When the amount of the solvent in the step (a) is 25 liters per kg of pelletized raw hop (it is in the smallest amount in the range of the present invention, i.e. 25 liters at the completion of boiling) or more, the hop treatment can be carried out without any trouble. When it is 115 liters per kg of pelletized raw hop (it is the sparsest system of hop within the present invention, i.e. 115 liters of the solvent before boiling, which is 100 liters plus an amount corresponding to the largest evaporation loss of 15 kg) or less, it is able to form a system which contains the hop at a considerably high ratio. Thus, it is suited for using the evaporation loss per kg of pelletized raw hop as the parameter of the evaporation of the hop aroma component.

The liquid amount of the solvent used in the step (a) may be about 1/10-1/200 (volumetric basis) of the liquid amount of the raw material liquid used in the step (b). Thus, the hop treatment in the step (a) is carried out in a system which contains the hop at a considerably high ratio, and the treatment can be carried out with a much smaller amount of the solvent than the raw material liquid used in the step (b). When the liquid amount of the solvent is about 1/200 (volumetric basis) or more of that of the raw material liquid, the hop treatment can be carried out without any trouble. When it is about 1/10 (volumetric basis) or less, heat energy can be efficiently used. As described above, since it is sufficient with a small amount of the solvent, it is possible to use a vessel or a kettle as the device for carrying out the step (a), which is considerably smaller than the conventional boiling kettle.

The boiling in the step (a) is carried out so that a high-temperature holding time of about 30-180 minutes is obtained. During the high temperature holding, the solubilization reaction of the bittering component of the hop (specifically, isomerization of α-acid) proceeds, so that the bittering component of the hop can be extracted into the solvent. In order to efficiently utilize the bittering component of the hop (in other words, the amount of the hop used is reduced to lower the production cost), it is preferred to extract as much of the bittering component as possible with the lees amount of the hop, and the bittering component can be sufficiently extracted until the heating time reaches about 180 minutes. Further, with the heating time from about 30 minutes, it is possible to impart the bitter taste to a perceptible extent to the products.

For the boiling in the step (b), although the heating conditions desired for the raw material liquid can be set, they may be varied depending on, for example, the raw material liquid used, the product concept required for a finished product of beer or beer-like beverage. According to the present invention, since the raw material liquid is boiled in the step (b), even if wort is used as the raw material liquid, it is possible to remove the malt aroma component by evaporation.

It is common to use wort as the raw material liquid. As is generally known, the wort can be obtained by using malt (more specifically, barley malt) as the main raw material, and further using one or more auxiliary materials (or adjuncts) such as barley, wheat, wheat malt, rye, rye malt, oat, rice, corn (or sorghum), starch, liquid sugar and the like as necessary.

However, the present invention is not limited thereto, and those other than malt, for example, other raw material liquids obtained from one or more of soybean peptides, soybean proteins, pea proteins, corns and the like may be used.

As the solvent, at least one selected from the group consisting of water, liquid same as the raw material liquid (for example, wort), and liquid sugar can be used. Further, a solvent composed of at least one selected from the above group with an additive added thereto can be used. The additive may be a pH adjuster such as acids, alkalis, salts and the like, and other liquid property regulators, an emulsifier, a stabilizer, an antioxidant and the like, and further other optional various fruits, herbs, spices and the like.

In the first aspect of the present invention, the boiling in the step (b) comprises:
(i) heating the raw material liquid to raise its temperature;
(ii) while holding the temperature-raised raw material liquid at a high temperature in a non-boiling state, adding the hop-treated liquid matter thereto to form a mixture of the raw material liquid and the hop-treated liquid matter, and subsequently holding the mixture at a high temperature in a non-boiling state; and
(iii) after the high-temperature holding, heating the mixture to boil. Hereinafter, through the present invention, a series of boiling processes of the temperature raise, the high-temperature holding and the boiling are also referred to as "three-phase boiling".

Removal by evaporation of dimethyl sulfide (DMS), the unpleasant malt aroma component, takes places through a reaction step for producing dimethyl sulfide (DMS) from S-methyl methionine (SMM) and an evaporation step for removing dimethyl sulfide (DMS) by evaporation. Among them, rate controlling is the reaction step (DMS has a boiling point of 37-38°C). This reaction proceeds even in a non-boiling state as long as the raw material liquid is held at a high temperature. Thereafter, if it is boiled, DMS can be removed for a short time. In the conventional general boiling method, a raw material liquid is heated to raise its temperature, and it is kept heating also after reaching a boiling state so as to boil it continuously. On the other hand, according to the above embodiment (the three-phase boiling) of the present invention, in the second phase (ii) the raw material liquid is held at a high temperature in a non-boiling state, whereby the above reaction is allowed to proceed, so that SMM is converted to DMS, and then in the third phase (iii) the raw material liquid is boiled, whereby, the evaporation sufficiently can remove DMS to the extent equal to the conventional method, and the non-boiling state in the second phase (ii) can reduce an energy corresponding to at least latent heat, furthermore, can suppress convection of the wort compared with that in the boiling state, so that heat coagulation reaction of protein becomes hard to proceed, thus it is possible to alleviate a reduction of the substance contributing to foam retention (for example, 40 kDa protein).

In the present invention, when simply referring to "high-temperature holding" or "holding ··· at a high temperature", it may be either a boiling state or a non-boiling state, and it means a temperature at which the isomerization reaction of α-acid proceeds when referring to the step (a), and a temperature at which the reaction of conversion of S-methyl methionine to dimethyl sulfide proceeds when referring to the step (b), in both of which cases it is held at temperatures within a range between, for example, a boiling point to a temperature lower than the boiling point by 10°C. It is to be noted that the "high-temperature holding time" may include a period in a boiling state (namely, a period during which the boiling temperature is maintained).

According to a second aspect of the present invention, there is provided a process for producing a beer or beer-like beverage, comprising:
(a) boiling hop together with a solvent,
   wherein an amount of the solvent is
   (i) an amount of 25 to 100 liters per kg of pelletized raw hop, and
   (ii) an additional amount corresponding to evaporation loss per kg of pelletized raw hop, wherein the additional amount corresponds to 1 to 15 kg per kg of pelletized raw hop, and thus,
      obtaining a hop-treated liquid matter,
      wherein the boiling is carried out so that a high-temperature holding time from 30 to 180 minutes is obtained in the step (a); and
(c) boiling a raw material liquid which is wort, wherein the boiling in the step (c) comprises:
   (i') heating the raw material liquid to raise its temperature;
   (ii') holding the temperature-raised raw material liquid at a high temperature in a non-boiling state, wherein the high temperature is in a range between a boiling point to a temperature which is 10°C lower than the boiling point; and
   (iii') after the high-temperature holding, heating the raw material liquid to boil,
   and wherein the steps (a) and (c) are carried out individually, and the hop-treated liquid matter obtained by the step (a) is added to a raw material-boiled liquid matter obtained by the step (c), in one or more steps (or points) after the step (c) until cooling.

While in the first aspect of the present invention the hop-treated liquid matter obtained by the step (a) is added before boiling the raw material liquid, in the second aspect of the present invention the hop-treated liquid matter is added after boiling the raw material liquid. Also in the second aspect of the present invention, heating conditions can be applied differently to the hop from the raw material liquid in the same manner as in the first aspect. In more detail, in the case of the second aspect of the present invention, the heating conditions can be broken down into those for the hop and those for the raw material, and the heating conditions desired for the hop are set at the step (a), and the heating conditions desired for the raw material liquid are set for the step (b). Therefore, also by the second aspect of the present invention, it is possible to efficiently reduce or remove the hop aroma component.

In the second aspect of the present invention, the boiling in the step (c) comprises :
(i') heating the raw material liquid to raise its temperature;
(ii') holding the temperature-raised raw material liquid at a high temperature in a non-boiling state; and
(iii') after the high-temperature holding, heating the raw material liquid to boil. Also in this embodiment (the three-phase boiling), it is possible to obtain the effects similar to those in the above embodiment (the three-phase boiling) of the first aspect of the present invention.

As to others regarding the second aspect of the present invention, the same description as described above about the first aspect of the present invention (as to the step (c), the same description as described about the step (b)) is applied, unless otherwise stated.

In the hop treatment of the step (a), in order to efficiently reduce or remove the hop aroma component the hop is boiled together with a solvent of which amount is 25 to 100 liters and an additional amount corresponding to evaporation loss per kg of pelletized raw hop so that 1 to 15 kg of evaporation loss is obtained per kg of pelletized raw hop. However, the hop may be boiled together with a solvent of which amount is 25 to 100 liters and an additional amount corresponding to evaporation loss per kg of pelletized raw hop so that 15 kg or less of evaporation loss is obtained per kg of pelletized raw hop, and thereby, it is possible to control the amount of the hop aroma component. It can be understood that the amount of the hop aroma component is controllable in the same manner as in the above description, which also can be included in the scope of the present invention.

### Advantageous Effects

According to the present invention, by the above hop treatment in the step (a) and the boiling of the raw material liquid (and the hop-treated liquid matter, if present) in the step (b) or (c), the heating conditions can be applied differently to the hop from the raw material liquid, the bittering component of the hop can be extracted in the step (a), and further the hop is heated in a system which contains the hop at a considerably high ratio in the step (a). Then, this heating is carried out so that the parameter of the evaporation loss per kg of pelletized raw hop is within the predetermined range, and therefore it is possible to efficiently reduce or remove the hop aroma component.

### Brief Description of Drawings

Fig. 1 is a schematic cross sectional view showing a hop treatment device used in Embodiment 1 of the present invention.
Fig. 2 is a schematic cross sectional view showing the hop treatment device of Fig. 1 and a raw material liquid kettle used in Embodiment 1 of the present invention.
Fig. 3 is a schematic view for describing a process for producing beer in Embodiment 1 of the present invention.
Fig. 4 is a schematic view for describing a process for producing beer in Embodiment 2 of the present invention.
Fig. 5 is a graph of a linalool content to an evaporation loss in Example 2.

### Explanation of Reference

- [0036] 1: hop charging inlet
- 3: solvent supply line
- 5: exhaust gas line
- 7: jacket (jacket type heating means)
- 9: heater
- 10: hop treatment device
- 11: stirrer (stirring means)
- 12: mixture of hop and solvent (after treatment, it becomes hop-treated liquid matter)
- 13: discharge line
- 15: raw material liquid supply line
- 17: discharge line
- 19: mixture of hop-treated liquid matter and wort (raw material liquid) (after boiling, it becomes raw material-boiled liquid matter)
- 20: raw material liquid kettle

### Best Mode for Carrying Out the Invention

### (Embodiment 1)

The present embodiment relates to the first aspect of the present invention, and will hereinafter be described in detail with reference to the drawings. In the present embodiment, a case where wort is used as a raw material liquid to produce a general light-colored beer will be described, but it is not limited to this.

### • Step (a)

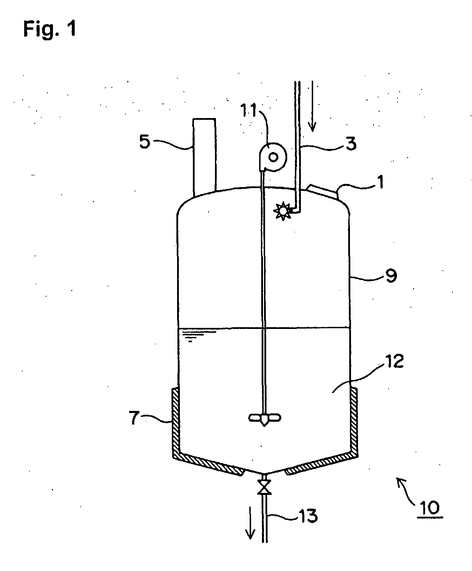

First, hop treatment is performed in a hop treatment device 10 shown in Fig. 1. The hop treatment device 10 includes a heater 9, and a hop charging inlet 1 (for example, it may be what is called a manhole) and a solvent supply line 3 (for example, an end of which may be provided with a spray ball) are provided at the upper part of the heater 9, while a jacket 7 for heating a mixture 12 of hop (not shown) and a solvent and a discharge line 13 are provided at the lower part of the heater 9. Further, the hop treatment device 10 preferably includes a stirrer 11, as stirring means, with agitating blades or wings for stirring a mixture of hop and a solvent in the heater 9. In addition, the hop treatment device 10 may be equipped with an optional appropriate meter (not shown) required for measuring or calculating an evaporation loss, for example, a load cell, a differential pressure transmitter, a liquid level meter for measuring a liquid depth. The inventor refers the hop treatment device 10 to "PIE" (Pre-Isomeriser & Evaporator).

Referring to Fig. 1, first, a solvent is supplied to the hop treatment device 10 from the solvent supply line 3, and hop is charged from the hop charging inlet 1. The hop may be in any shape such as pellets, extracts or cones. The solvent may be, for example, water, wort (the same liquid as the raw material liquid) or liquid sugar; a mixed liquid of two or more of these; or one of these or a mixed liquid of two or more of these to which an additive is added.

A ratio of the solvent to the hop may be 25-100 L of the solvent with a predetermined additional amount of evaporation loss with respect to 1 kg of pelletized raw hop. Thereby, a system which contains the hop at a considerably high ratio is made.

The mixture 12 of the hop and the solvent is heated by the jacket 7 while stirring with the stirrer 11 under, for example, an atmospheric pressure. During this operation, the mixture may have a pH value of about 5-6. The operation of heating the hop and the solvent while stirring them can efficiently extract components, in particular the bittering component from the hop, and can prevent the hop (or hop after component extraction, so-called hop dreg) from sedimentation. Further, it can promote evaporation of the hop aroma component. For the heating, a jacket type heating means such as the jacket 7 is stain-resistant, and thus requires less frequent maintenance. In addition, since such heating means can be equipped outside a vessel, it does not hinder the stirring means even if it is used. However, the heating means is not limited thereto, and may be any other appropriate heaters. For example, a coil type heating means has a relatively simple structure and is easy in maintenance.

The heating is carried out so that 1-15 kg of evaporation loss per kg of pelletized raw hop, and a high-temperature holding time of about 30-180 minutes are obtained.

The evaporation loss per kg of pelletized raw hop can control a degree of removal by evaporation of the hop aroma component. In the system which contains the hop at a considerably high ratio as described above, the selection of 1-15 kg of evaporation loss results in that linalool as the hop aroma component can be efficiently reduced or removed. This fact has been confirmed by the present inventor (described in Example 2 below).

Further, the high-temperature holding time can control solubilization of the bittering component of hop (specifically isomerization of α-acid). The selection of about 30-180 minutes of the high-temperature holding time results in that the bittering component of the hop can be sufficiently solubilized and extracted into the solvent.

The boiling is preferably carried out as follows: the temperature of the solvent is raised by heating, the hop is added to the solvent after the temperature reaches 90°C, a mixture of these is kept on heating even after it reaches a boiling state until a predetermined evaporation rate is obtained, and then the mixture is heated in a non-boiling state as necessary to reach a predetermined high-temperature holding time. Such a heating control can be easily carried out.

For example, the solvent is heated under an atmospheric pressure to gradually raise its temperature from a normal temperature. After the temperature reaches 90°C, the hop is added to the solvent, so that the resultant as a whole corresponds to the mixture 12. The mixture 12 is held at a high temperature in a range of about 90-100°C for about 30-180 minutes (including a period during which it is in a boiling state). During this high temperature holding, following the temperature raise, the mixture may be boiled at about 100°C to obtain about 1-15 kg of evaporation loss per kg of pelletized raw hop.

Thereby, the mixture 12 of the hop and the solvent is treated to obtain a hop-treated liquid matter (a mixture of hop after a component has been extracted and a solvent into which the component has been extracted). In this liquid matter, the bittering component of the hop is sufficiently solubilized, and the hop aroma component is efficiently reduced or removed.

### • Step (b)

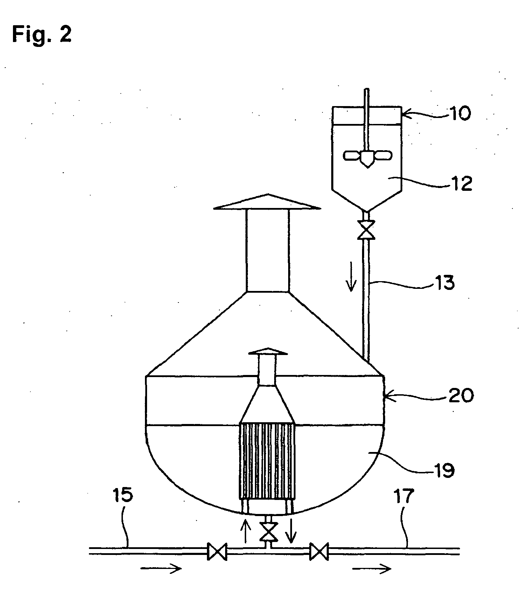

Next, a mixture of the hop-treated liquid matter and wort is boiled in a raw material liquid kettle 20 shown in Fig. 2. The raw material liquid kettle 20 is connected to the hop treatment device 10 through the discharge line 13, and a raw material liquid supply line 15 and a discharge line 17 may be provided by being connected thereto, for example, as shown in the drawing. As the raw material liquid kettle, a general type boiling kettle with *Röhrenkocher* as shown in Fig. 2 can be used, but it is not limited thereto.

The mixture 12 obtained by the hop treatment in the step (a) is transferred as the hop-treated liquid matter to the raw material liquid kettle 20 from the hop treatment device 10 through the discharge line 13. In addition, wort is supplied to the raw material liquid kettle 20 from the raw material liquid supply line 15. The wort is not particularly limited, but it can be obtained by filtrating mash, which is produced by cooking malt optionally with an auxiliary material(s), with a wort filter.

An amount of the wort is not particularly limited, but it may be, for example, about 10-200 times (volumetric basis) the amount of the solvent used in the step (a) (namely, the amount of the solvent used in the step (a) is about 1/10-1/200 (volumetric basis) of the amount of the wort used in the step (b)).

The mixture 19 of the hop-treated liquid matter and the wort is boiled under, for example, an atmospheric pressure. During this operation, the pH value may be about 5-6.

The boiling is preferably carried out by the following three-phase boiling:
(i) heating the raw material liquid to raise its temperature;
(ii) while holding the temperature-raised raw material liquid at a high temperature in a non-boiling state, adding the hop-treated liquid matter thereto to form the mixture 19 of the raw material liquid and the hop-treated liquid matter, and subsequently holding the mixture 19 at a high temperature in a non-boiling state; and
(iii) after the high-temperature holding, heating the mixture to boil.

The temperature rising rate in the phase (i) may be set appropriately. Following the first phase (i), but before the second phase (ii), the boiling state may exist.

In the second phase (ii), the converting reaction from SMM to DMS proceeds. Since the mixture is in a non-boiling state, an energy corresponding to at least latent heat can be reduced, compared with the case where it is boiled. Furthermore, since convection of the wort is suppressed in the non-boiling state compared with that in the boiling state, heat coagulation reaction of protein becomes hard to proceed, and it is possible to alleviate a reduction of the substance contributing to foam retention (for example, 40 kDa protein). The second phase (ii) may be carried out continuously or intermittently (a boiling state or a state out of the high-temperature holding may exist for a short time between the non-boiling states) until the mixture 19 is finally boiled in the third phase (iii).

The third phase (iii) is carried out so that DMS as the malt aroma component is sufficiently removed by evaporation, for example, an evaporation rate of 3-4 wt% is obtained. The "evaporation rate" is calculated as [(the initial weight of the liquid matter) - (the final weight of the liquid matter)] / (the initial weight of the liquid matter) X 100 (wt%). This evaporation rate can be smaller than that (an evaporation rate of about 11-12 wt%) obtained by the conventional general boiling method.

Specifically, heating is carried out until a desired high temperature state is reached in the first phase (i) (the heating may be conducted by supplying steam to the raw material liquid kettle 20), the heating is stopped (in rest) in the second phase (ii) (during the stop of heating, high temperature holding is made by residual heat), and heating is carried out for a short time to boil the mixture in the third phase (iii). The present inventor refers such an operation to as a "DMS-rest method" which stops heating when converting a precursor SMM to DMS.

According to the three-phase boiling, compared with the conventional general boiling method (an evaporation rate of about 11-12 wt%), foam retention can be improved with less consumption of heat energy, and moreover can effectively reduce or remove DMS as the unpleasant malt aroma component.

However, the present embodiment is not limited to this. In place of the three-phase boiling, usual boiling (namely, the second phase (ii) does not exist, and the third phase (iii) is carried out following the first phase (i)) may be carried out.

As described above, the mixture 19 of the hop-treated liquid matter and the wort is boiled to obtain a raw material-boiled liquid matter. The obtained liquid matter is withdrawn from the raw material liquid kettle 20 through the discharge line 17, and transferred to a next step.

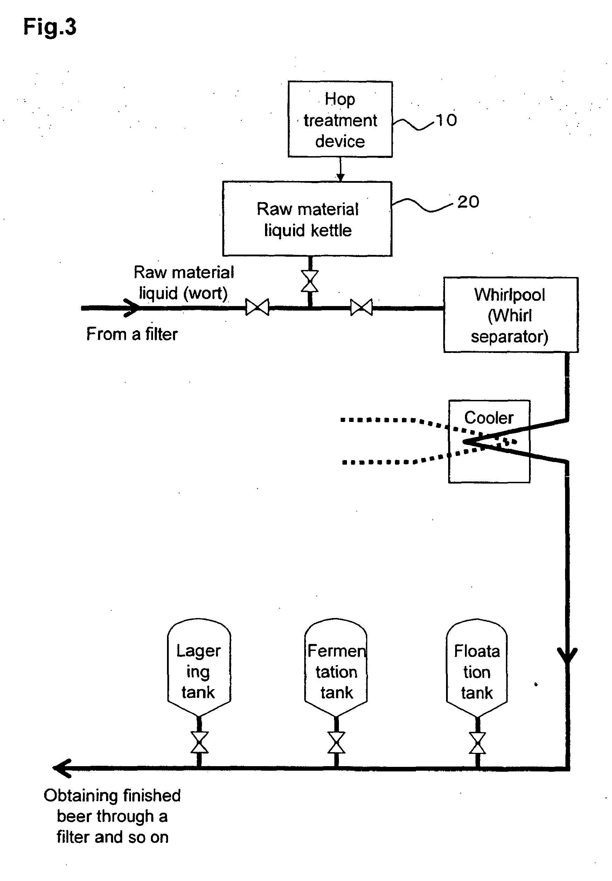

Then, for example as shown in Fig. 3, unnecessary coagulated protein and the like are removed off by whirl separation with a whirlpool; the resultant is cooled in a cooler followed by addition of yeast thereto; an unnecessary substance is removed off by floatation separation with a floatation tank; the resultant is subjected to fermentation by the yeast in a fermentation tank to produce green beer (fermented wort), the green beer is lagered (or stored or matured) in a lagering (or strage) tank, then passed through a filter for final filtration to become finished beer.

In the conventional general boiling method, when the evaporation rate is reduced, the produced beer has a large amount of the hop aroma component (gorgeous hop aroma) and good foam retention (rich foam). Contrary to that, when the evaporation rate is increased, the produced beer has a small amount of the hop aroma component (moderate hop aroma) and less foam retention (poor foam). In the latter case, if hop is supplementarily added in the course of the boiling, the amount of the hop aroma component can be increased. However, in the conventional general boiling method, it is not possible to produce beer having a small amount of the hop aroma component and good foam retention.

However, according to the present embodiment, it is possible to produce beer having a small amount of the hop aroma component (moderate hop aroma) and good foam retention (rich foam).

In the above embodiment, in addition to the hop aroma component, foam retention is described as an example of representative beer qualities, but other various qualities may be evaluated. Further, the heating conditions (e.g. temperature, pressure, evaporation loss or evaporation rate, high-temperature holding time, liquid phase pH value) in the step (a) and the step (b) can be appropriately set depending on the hop, the solvent, the raw material liquid used, the commercial product concept of beer or beer-like beverage as the finished product, and so on.

### (Embodiment 2)

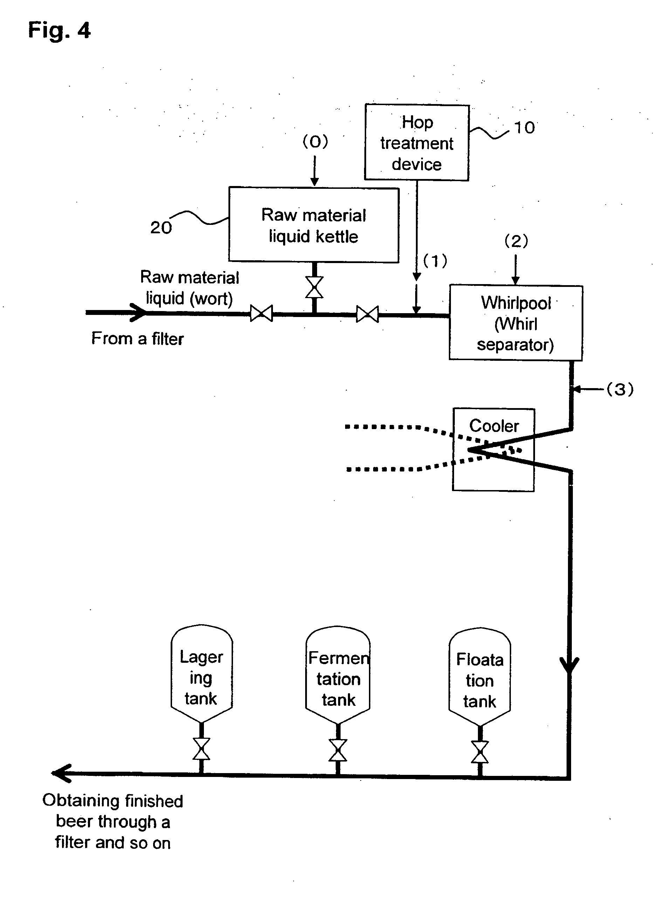

The present embodiment relates to the second aspect of the present invention, and will hereinafter be described focusing on points different from Embodiment 1. While Embodiment 1 adds the hop-treated liquid matter, which is obtained from the step (a), at a point (0) shown in Fig. 4 before boiling the wort, the present embodiment changes the point at which the hop-treated liquid matter is added.

In the present embodiment, in place of the step (b) of Embodiment 1, a step (c) is conducted wherein the wort (raw material liquid) is boiled alone.

For the boiling, the same heating conditions as those in Embodiment 1 may be applied except that in place of the mixture of the hop-treated liquid matter and the wort being boiled in the step (b), the wort is boiled alone. Also in the present embodiment, it is preferred to carry out the three-phase boiling as described in Embodiment 1, but usual boiling may be carried out.

Then, the hop-treated liquid matter obtained in the step (a) may be added to a raw material-boiled liquid matter obtained by the step (c), in one or more steps (or points) after the step (c) until cooling, for example, at one or more of the following points (1)-(3):
(1) after boiling the wort (raw material liquid) and before the whirl separation;
(2) during the whirl separation; and
(3) after the whirl separation and before the cooling as shown in Fig. 4 (Fig. 4 shows an illustrative case where the hop-treated liquid matter is added at the point (1)).

According to the present embodiment, it is possible to achieve the similar effects to those in Embodiment 1.

### Example 1

As Example 1 of the present invention, the Embodiment 1 described above with reference to Figs. 1-3 (in which the step (b) is conducted by the usual boiling) was carried out.

### • Step (a) Boiling in the hop treatment device 10

Capacity of heater: 400L
Hop: pellets (mixture of aroma type and bitter type), about 3 kg
Solvent: water, 97 L
Initial weight of liquid matter (mixture of hop and solvent): about 100 kg
Pressure: atmospheric pressure (about 0.1 MPa)
Temperature: a temperature of the liquid matter is raised to 90°C or higher, and then hop is added thereto and the resultant mixture is boiled at about 100°C for about 40 minutes in a boiling state
High-temperature holding time: about 45 minutes (including the boiling state) at about 90-100°C
pH: 5.2-5.4
Evaporation loss: about 30 kg (about 10 kg per kg of pelletized raw hop)

### • Step (b) Boiling in the raw material liquid kettle 20 (boiling kettle)

Capacity of raw material liquid kettle: 7500 L
Hop-treated liquid matter: the whole obtained in the step (a), about 70 kg
Wort: about 5000 L
Initial weight of liquid matter (mixture of hop-treated liquid matter and wort): about 5070 kg
Pressure: atmospheric pressure (about 0.1 MPa)
Temperature: (i) a temperature of the liquid matter is raised to 90°C or higher, and then (ii) while holding it at a high temperature in a non-boiling state, the hop-treated liquid matter was added thereto during this period, and the resultant mixture was subsequently and continuously held at a high temperature in a non-boiling state, to make 60 minutes of high-temperature holding time in total, (iii) after the high-temperature holding, the mixture was boiled at about 100°C for about 30 minutes in a boiling state.
pH: 5.2-5.4

As Comparative Example 1, the step (a) of Embodiment 1 was not carried out and only a step (b)', in place of the step (b), was carried out under the conditions below. Comparative Example 1 corresponds to the heating conditions in the conventional general boiling method, which does not use the hop treatment device.

### • Step (b)'

Hop: the same as used in the step (a) of Example 1
Wort: liquid corresponding to a mixture of a solvent obtained by subtracting an evaporation loss during the step (a) from the solvent used in the step (a) of Example 1, and the wort used in the step (b) of Example 1; i.e. a mixture of about 67 L of water and about 5000 L of the wort of Example 1
The raw material liquid kettle, pressure, pH, temperature: the same as in the step (b) of Example 1 (except that the hop was added after raising the temperature)
Evaporation loss: the boiling time in a boiling state is extended so that an evaporation loss becomes three times the total of the evaporation losses in the step (a) and the step (b) of Example 1.

Furthermore, as Comparative Example 2, the step (a) of Example 1 was not carried out and only a step (b)", in place of the step (b), was carried out under the conditions below. Comparative Example 2 does not use the hop treatment device as in Comparative Example 1, but the boiling in a boiling state was moderated to a similar extent of that of Example 1.

### • Step (b)''

Hop: the same as used in the step (a) of Example 1
Wort: liquid corresponding to a mixture of a solvent obtained by subtracting an evaporation loss during the step (a) from the solvent used in the step (a) of Example 1, and the wort used in the step (b) of Example 1; i.e. a mixture of about 67 L of water and about 5000 L of the wort of Example 1
The raw material liquid kettle, pressure, pH, temperature: the same as in the step (b) of Example 1 (except that the hop was added after raising the temperature)
Evaporation loss: the boiling time in a boiling state is adjusted so that an evaporation loss becomes substantially the same as the total of the evaporation losses in the step (a) and the step (b) of Example 1.

The raw material-boiled liquid matters which were obtained in Example 1 and Comparative Examples 1, 2 respectively, were fermented and lagered (or stored) under the same conditions to obtain finished beers. As to each of the raw material-boiled liquid matters and the finished beers obtained, conversion ratio to iso-α-acid, linalool content, 40 kDa protein content, and foam retention were analyzed, and consumed energy amounts were calculated.

### • Conversion ratio to iso-α-acid (%)

Each amount of α-acid and iso-α-acid was measured by HPLC (High Performance Liquid Chromatography), and their existence ratios (weight ratios) were found.

The α-acid, which is the bittering component of hop, is converted into iso-α-acid by isomerization, thereby being solubilized and moves to the wort. Therefore, the conversion ratio to iso-α-acid indicates the ratio of the bittering component that has been efficiently utilized (bitterness availability). In order to efficiently impart bitterness to the wort with a less amount of hop, the higher the conversion ratio to iso-α-acid, the more preferred.

### • Linalool (ppb)

The finished beers were analyzed by GC-MS (gas chromatography mass spectrometer).

Linalool is one of the hop aroma components, and evaporates by boiling.

### • 40 kDa protein (mg/L)

The finished beers were analyzed by gel electrophoresis.

40 kDa protein is a protein derived from malt, and is a substance contributing to foam retention of the finished beers. The longer the time it is exposed to high temperatures, the more it is reduced. In general, the longer the foam retention time, the better. Therefore, the more the amount of 40 kDa protein (the residual amount), the better.

### • Foam retention (second)

The finished beers were analyzed by the NIBEM method. The NIBEM method is well-known in the field of production of beer, and described in the analysis method provisions "Analytica-EBC" published by EBC (European Brewery Convention).

In general, the longer the foam retention, the better.

### • Ratio of heats consumed (-)

Amounts of heat (cal) consumed for heating in Example 1 and Comparative Examples 1, 2 were calculated based on the evaporation loss using the latent heat of water, assuming that they approximately corresponds to the energy required for evaporation. The amount of heat consumed in Example 1 was a total of heats consumed for heating in the step (a) and the step (b) (thus, it was calculated based on the total of the evaporation losses in the step (a) and the step (b)), and the amounts of heat consumed in Comparative Examples 1, 2 were amounts of heat consumed for heating in the step (b)' and the step (b)", respectively (thus, they were calculated based on the evaporation losses in the step (b)' and the step (b)", respectively). Then, the ratio of heats consumed was defined as a ratio of the amount of heat consumed in Example 1 and Comparative Example 2 with respect to the amount of heat consumed in Comparative Example 1, which corresponded to the heating conditions in the conventional general boiling method (conventional conditions).

In view of energy saving, the smaller amount of heat consumed, the better.

The results are shown in Table 1.

**Table 1**

| | Example 1 | Comparative Example 1 (conventional conditions) | Comparative Example 2 |
|---|---|---|---|
| Conversion Ratio to iso-α-acid (%) | 97 | 96 | 90 |
| Linalool (ppb) | 1 | 1 | 5 |
| 40 kDa Protein (mg/L) | 64 | 32 | 63 |
| Foam retention (second) | 278 | 263 | 278 |
| Ratio of heats consumed | 1/3 | 1 | 1/3 |

As understood from Table 1, although Example 1 used one third of heat consumed in Comparative Example 1 (conventional conditions), the conversion ratio to iso-α-acid and the amount of linalool in Example 1 were substantially equal to those of Comparative Example 1, so that Example 1 were able to obtain high bitterness and low linalool aroma equally as in the conventional case.

Comparative Example 2 used one third of heat consumed in Comparative Example 1 similarly to Example 1, however, in Comparative Example 2 the conversion ratio to iso-α-acid was greatly reduced and the amount of linalool was greatly increased. Therefore, according to Comparative Example 2, the bitterness was reduced compared with the conventional case, and the hop-derived aroma such as linalool became dominant. In order to obtain the same bitterness as the conventional case, it is necessary to increase the amount of hop used. However, though the linalool aroma is already strong, the increase in the amount of hop used causes that the linalool aroma becomes much stronger.

Further, as understood from Table 1, Example 1 showed that 40 kDa protein remained more than in Comparative Example 1, and therefore the foam retention was better than that of Comparative Example 1.

Comparative Example 2 also showed that 40 kDa protein remained more than in Comparative Example 1, and therefore the foam retention was better than that of Comparative Example 1. However, as described above, Comparative Example 2 had problems in the conversion ratio to iso-α-acid and the amount of linalool.

### Example 2

The evaporation loss in the step (a) was varied, and an influence of the evaporation loss on the amount of the hop aroma component was investigated.

### • Step (a)

The hop-treated liquid matter was obtained in the same manner as in Example 1, except that the boiling time in a boiling state was adjusted so that evaporation losses were 2.5, 5.0, 7.5, 10.0, and 15.0 kg per kg of pelletized raw hop. The amount of the solvent used in the step (a) was 32.3 L per kg of pelletized raw hop.

### • Scale-down step (b)

In place of the step (b) of Example 1, a laboratory boiling device with a small capacity (hereinafter referred to as a small boiling device) was used, 10 kg of wort corresponding to that used for the step (b) of Example 1 and obtained similarly was charged therein, and 0.14 kg of the hop-treated liquid matter obtained in the above step (a) was added thereto. Then, the resultant was boiled to obtain a raw material-boiled liquid matter. Except that the capacity of the whole experiment system was scaled down, parameters including, for example, the treatment time, pH, evaporation rate were made to conform to those of Example 1.

As to the raw material-boiled liquid matters obtained by the scale-down step (b), linalool content was determined by the analysis with GC-MS (gas chromatography mass spectrometer) in the same manner as in Example 1. In addition, linalool content was determined in the same manner as to a liquid matter for a case where the evaporation loss is zero, which was obtained by adding a hop-treated liquid matter to the wort at a time point after the hop was added and sufficiently dispersed but the temperature did not reach a boiling point in the step (a) (about 2 minutes after the addition), and boiling the mixture in the scale down step (b) in the same manner.

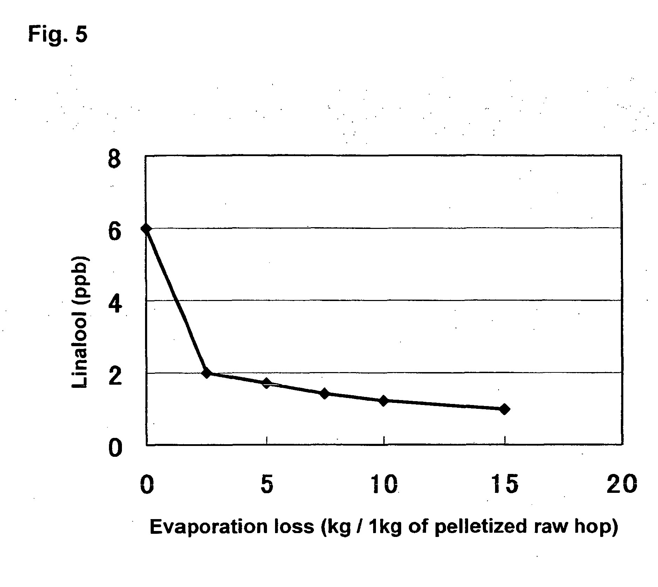

The results are shown in Table 2 and Fig. 5.

**Table 2**

| | | | | | | |
|---|---|---|---|---|---|---|
| Evaporation loss (kg/l kg of pelletized raw hop) | 0 | 2.5 | 5.0 | 7.5 | 10.0 | 15.0 |
| Linalool (ppb) | 6 | 2.0 | 1.7 | 1.4 | 1.2 | 1.0 |

As understood from Table 2 and Fig. 5, it was confirmed that 1-15 kg of the evaporation loss per kg of pelletized raw hop resulted in that linalool as the hop aroma component could be efficiently reduced or removed.

### Industrial Applicability

The present invention may be utilized for producing beer or a beer-like beverage.

## Claims

1. A process for producing beer or beer-like beverage, comprising:
(a) boiling hop together with a solvent,
wherein an amount of the solvent is
(i) an amount of 25 to 100 liters per kg of pelletized raw hop, and
(ii) an additional amount corresponding to evaporation loss per kg of pelletized raw hop, wherein the additional amount corresponds to 1 to 15 kg per kg of pelletized raw hop, and thus,
obtaining a hop-treated liquid matter,
wherein the boiling is carried out so that a high-temperature holding time from 30 to 180 minutes is obtained in the step (a); and
(b) adding thus obtained hop-treated liquid matter by the step (a) to a raw material liquid which is wort, and boiling a mixture of the raw material liquid and the hop-treated liquid matter, wherein the boiling in the step (b) comprises:
(i) heating the raw material liquid to raise its temperature;
(ii) while holding the temperature-raised raw material liquid at a high temperature in a non-boiling state, adding the hop-treated liquid matter thereto to form a mixture of the raw material liquid and the hop-treated liquid matter, and subsequently holding the mixture at a high temperature in a non-boiling state, wherein the high temperature is in a range between a boiling point to a temperature which is 10°C lower than the boiling point; and
(iii) after the high-temperature holding, heating the mixture to boil.

2. The production process according to claim 1, wherein the liquid amount of the solvent is 1/10-1/200 (volumetric basis) of a liquid amount of the raw material liquid.

3. The production process according to claim 1 or 2, wherein the solvent is at least one selected from the group consisting of water, a same liquid as the raw material liquid, and liquid sugar, or at least one of them with an additive added thereto.

4. The production process according to any one of claims 1 to 3, wherein in place of the step (b) the process comprises:
(c) boiling a raw material liquid which is wort, wherein the boiling in the step (c) comprises:
(i') heating the raw material liquid to raise its temperature;
(ii') holding the temperature-raised raw material liquid at a high temperature in a non-boiling state, wherein the high temperature is in a range between a boiling point to a temperature which is 10°C lower than the boiling point; and
(iii') after the high-temperature holding, heating the raw material liquid to boil,
and wherein the steps (a) and (c) are carried out individually, and the hop-treated liquid matter obtained by the step (a) is added to a raw material-boiled liquid matter obtained by the step (c), in one or more steps after the step (c) until cooling.

## Patentansprüche

1. Verfahren zur Herstellung von Bier oder einem bierähnlichen Getränk, umfassend:
(a) Kochen von Hopfen zusammen mit einem Lösungsmittel, wobei eine Menge des Lösungsmittels
(i) eine Menge von 25 bis 100 Liter pro kg von pelletiertem Rohhopfen, und
(ii) eine zusätzliche Menge, die einem Verdampfungsverlust pro kg von pelletiertem Rohhopfen entspricht, wobei die zusätzliche Menge 1 bis 15 kg pro kg von pelletiertem Rohhopfen entspricht, ist, und somit,
Erhalten einer hopfenbehandelten Flüssigkeit,
wobei das Kochen durchgeführt wird, so dass eine Haltezeit bei hoher Temperatur von 30 bis 180 Minuten im Schritt (a) erhalten wird; und
(b) Hinzufügen der so durch Schritt (a) erhaltenen hopfenbehandelten Flüssigkeit zu einer Rohmaterial-Flüssigkeit, welche Würze ist, und Kochen eines Gemisches der Rohmaterial-Flüssigkeit und der hopfenbehandelten Flüssigkeit, wobei das Kochen in Schritt (b) umfasst:
(i) Erhitzen der Rohmaterial-Flüssigkeit, um deren Temperatur zu erhöhen;
(ii) während des Haltens der Temperatur-erhöhten Rohmaterial-Flüssigkeit bei einer hohen Temperatur in einem nicht-kochenden Zustand, Hinzufügen der hopfenbehandelten Flüssigkeit dazu, um ein Gemisch der Rohmaterial-Flüssigkeit und der hopfenbehandelten Flüssigkeit zu bilden, und anschließend Halten des Gemisches bei einer hohen Temperatur in einem nicht-kochenden Zustand, wobei die hohe Temperatur in einem Bereich zwischen einem Siedepunkt bis zu einer Temperatur, welche 10 °C niedriger als der Siedepunkt ist, liegt; und
(iii) nach dem Halten bei hoher Temperatur, Erhitzen des Gemischs bis zum Kochen.

2. Herstellungsverfahren nach Anspruch 1, wobei die Flüssigkeitsmenge des Lösungsmittels 1/10 - 1/200 (volumetrische Basis) einer Flüssigkeitsmenge der Rohmaterial-Flüssigkeit beträgt.

3. Herstellungsverfahren nach Anspruch 1 oder 2, wobei das Lösungsmittel zumindest eines aus der Gruppe ist, die aus Wasser, der gleichen Flüssigkeit wie die Rohmaterial-Flüssigkeit und flüssigem Zucker oder zumindest einem davon mit zugefügten Additiv besteht.

4. Herstellungsverfahren nach einem der Ansprüche 1 bis 3, wobei das Verfahren anstelle von Schritt (b) umfasst:
(c) Kochen einer Rohmaterial-Flüssigkeit, welche Würze ist, wobei das Kochen in Schritt (c) umfasst:
(i') Erhitzen der Rohmaterial-Flüssigkeit, um deren Temperatur zu erhöhen;
(ii') Halten der Temperatur-erhöhten Rohmaterial-Flüssigkeit bei einer hohen Temperatur in einem nicht-kochenden Zustand, wobei die hohe Temperatur in einem Bereich zwischen einem Siedepunkt bis zu einer Temperatur, welche 10 °C niedriger als der Siedepunkt ist, liegt; und
(iii') nach dem Halten bei hoher Temperatur, Erhitzen der Rohmaterial-Flüssigkeit bis zum Kochen,
und wobei die Schritte (a) und (c) einzeln durchgeführt werden und die hopfenbehandelte Flüssigkeit, die durch Schritt (a) erhalten wird, zu einer Rohmaterialgekochten Flüssigkeit, die durch Schritt (c) erhalten wird, in einem oder mehreren Schritten nach dem Schritt (c) bis zum Abkühlen hinzugefügt wird.

## Revendications

1. Procédé pour la production de bière ou de boisson similaire à la bière, comprenant :
(a) mettre à ébullition du houblon avec un solvant,
dans lequel la quantité de solvant est
(i) une quantité de 25 à 100 litres par kg de houblon brut sous forme de granulés, et
(ii) une quantité supplémentaire correspondant à la perte par évaporation par kg de houblon brut sous forme de granulés, la quantité supplémentaire correspondant à la plage de 1 à 15 kg par kg de houblon brut sous forme de granulés, et donc,
obtenir une matière liquide de houblon traité,
dans lequel la mise en ébullition est effectuée de telle sorte qu'un temps de maintien à température élevée de 30 à 180 minutes est obtenu dans l'étape (a) ;
(b) ajouter la matière liquide de houblon traité ainsi obtenue à l'étape (a) à un liquide de matière première qui est un moût, et la mise en ébullition d'un mélange constitué du liquide de matière première et de la matière liquide de houblon traité, dans lequel la mise en ébullition de l'étape (b) comprenant :
(i) chauffer le liquide de matière première pour élever sa température ;
(ii) tout en maintenant le liquide de matière première élevé en température à une température élevée dans un état ne bouillant pas, ajouter la matière liquide de houblon traité à celui-ci pour former un mélange de liquide de matière première et de matière liquide de houblon traité, et ensuite maintenir le mélange à une température élevée dans un état ne bouillant pas, dans lequel la température élevée est dans une plage entre un point d'ébullition et une température qui est 10°C plus basse que le point d'ébullition, et
(iii) après le maintien à température élevée, chauffer le mélange à ébullition.

2. Procédé de production selon la revendication 1, dans lequel la quantité de liquide de solvant est de 1/10 à 1/200 (base volumétrique) de la quantité liquide de liquide de matière première.

3. Procédé de production selon les revendications 1 ou 2, dans lequel le solvant est au moins un élément choisi dans le groupe constitué par l'eau, un même liquide que le liquide de matière première, et du sucre liquide, ou d'au moins l'un d'eux avec un additif ajouté à celui-ci.

4. Procédé de production selon l'une quelconque des revendications 1 à 3, dans lequel à la place de l'étape (b) le procédé comprenant :
(c) faire bouillir un liquide de matière première qui est du moût, dans lequel l'ébullition de l'étape (c) consiste à :
(i) chauffer le liquide de matière première pour élever sa température ;
(ii) maintenir le liquide de matière première élevé en température à une température élevée dans un état ne bouillant pas, dans lequel la température élevée est dans une plage entre un point d'ébullition et une température qui est de 10°C plus basse que le point d'ébullition ; et
(iii) après le maintien à température élevée, chauffer le liquide de matière première jusqu'à ébullition, et dans lequel les étapes (a) et (c) sont effectuées individuellement, et la matière liquide de houblon traité obtenue à l'étape (a) est ajoutée à une matière liquide de matière première bouillie obtenue à l'étape (c), en une ou plusieurs étapes après l'étape (c) jusqu'au refroidissement.
